# EUROPÄISCHE PATENTANMELDUNG

(11) **EP 0 950 881 A2**
(43) Veröffentlichungstag der Anmeldung: **20.10.1999**
(21) Anmeldenummer: 99106726.5
(22) Anmeldetag: 01.04.1999
(51) Int. Cl.: G01J 4/00

(54) **Verfahren und Vorrichtung zur automatischen relativen Justierung von Proben bezüglich eines Ellipsometers**

(30) Priorität: 17.04.1998 DE 19816974; 26.08.1998 DE 29815297 U
(71) Anmelder: NanoPhotonics AG, 55129 Mainz (DE)
(72) Erfinder: Abraham, Michael, Dr., 55129 Mainz (DE); Depner, Oliver, Dipl.-Ing., 55299 Saulheim (DE); Eberhardt, Matthias, Dr., 55296 Lörzweiler (DE)
(74) Vertreter: Fuchs Mehler Weiss & Fritzsche

(57) **Zusammenfassung**

Für die Justierung von Probe und Ellipsometer sind normalerweise wiederholte Eichmessungen erforderlich. Um eine automatische relative Justierung zu erreichen, ist dem Ellipsometer (10) ein bezüglich des Ellipsometers justierbares und verriegelbares Proben-Lage-Erkennungssystem (20) zugeordnet, das an eine auf dem Probentisch (2) und/oder auf das Gesamtsystem (43) Erkennungssystem (20)/Ellipsometer (10) eine Verstelleinrichtung (40) angeschlossen ist. Das Verfahren zur automatischen relativen Justierung sieht vor, daß zunächst anhand einer ersten Probe das System Probe Ellipsometer über die Symmetrie des Detektorsignals des Ellipsometers justiert wird und daß das Proben-Lage-Erkennungssystem bezüglich des Ellipsometers justiert und nach der Justierung mit diesem verriegelt wird. Bei allen weiteren Proben wird anhand der Signale des Erkennungssystems eine relative Ausrichtung von Probe und Ellipsometererkennungssystem durchgeführt. Insbesondere können die Messungen durchgeführt werden, ohne die Probe selbst zu bewegen, da die Justierung auch durch die alleinige Bewegung des Ellipsometer-Erkennungssystems erfolgen kann.

## Beschreibung

Die Erfindung betrifft eine Vorrichtung zur automatischen relativen Justierung von einer auf einem Probentisch befindlichen Probe bezüglich eines die Probenoberfläche untersuchenden Ellipsometers, wobei dem Ellipsometer ein bezüglich des Ellipsometers justierbares Proben-Lage-Erkennungssystem zugeordnet ist, das an eine Verstelleinrichtung angeschlossen ist. Die Erfindung bezieht sich auch auf ein Verfahren zur relativen Justierung der Probe bezüglich des Ellipsometers. Darüber hinaus bezieht sich die Erfindung auf eine Vorrichtung zur Erkennung der Position einer zu untersuchenden Probe relativ zu einem Nachweissystem.

Die Ellipsometrie ist eine empfindliche optische Methode zur Bestimmung von Brechzahlen und Dicken sehr dünner Schichten. Sie nutzt die Veränderung des Polarisationszustandes von Licht nach der Reflexion an der Probenoberfläche aus. Dazu wird kollimiertes und vollständig polarisiertes Licht unter einem bestimmten Einfallswinkel auf die Probe gerichtet. Nach der Reflexion verändert sich der Polarisationszustand der Strahlung als Funktion der Probeneigenschaften. So wird z.B. linear polarisiertes einfallendes Licht nach der Wechselwirkung mit der Probe elliptisch polarisiert reflektiert. Mit Hilfe geeigneter Anordnungen polarisationsoptischer Bauelemente im Strahlengang des Ellipsometers wird die Veränderung der Polarisation nachgewiesen. Sie wird üblicherweise über die ellipsometrischen Parameter beschrieben, aus denen mit Hilfe mathematischer Algorithmen Probeneigenschaften, wie die Dicke und die Brechzahl von Schichten, errechnet werden.

Eine sehr häufig verwendete Anordnung eines photometrischen Ellipsometers besteht aus einer Quelle für kollimiertes Licht, einem Polarisator, der Probe, einem Analysator und einem Detektor. Durch Rotation entweder des Analysators oder des Polarisators entsteht ein periodisches Signal am Detektor, aus dem sich die ellipsometrischen Parameter ergeben. Eine ausführliche Beschreibung der Ellipsometrie findet man in R.M. Azzam, Bashara, Ellipsometry and Polarized Light, North Holland, Amsterdam, 1988.

Das Bezugssystem der Ellipsometrie ist die Einfallsebene (x-z Ebene im gewählten Koordinatensystem des Ellipsometers) der Strahlung. Sie wird durch die Achse des einfallenden kollimierten Lichts und das Lot auf das Flächenelement der Probe aufgespannt, auf welches der Lichtstrahl trifft. Der Winkel zwischen Lot und Achse des einfallenden Strahls wird als Einfallswinkel bezeichnet. Sämtliche polarisationsoptischen Bauteile des Ellipsometers sind auf dieses Bezugssystem ausgerichtet. Der Einfallswinkel sowie die Winkelpositionen der Komponenten des Ellipsometers in bezug auf die Einfallsebene gehen unmittelbar in die Berechnung der Probeneigenschaften ein. Um die intrinsische Genauigkeit des Geräts auch wirklich zu erreichen, müssen diese Parameter mit hoher Genauigkeit (besser 0,01°) bekannt sein. Sie sind entweder konstruktiv vorgegeben oder werden über ein Goniometer eingestellt, auf dem die optischen Komponenten angeordnet sind. Häufig reichen diese Maßnahmen nicht aus, so daß nachträgliche Eichmessungen anhand bekannter Proben erforderlich sind.

Die Ellipsometrie ist in der Lage, Brechzahlen bis auf 0,01 % genau und Schichtdicken mit Genauigkeiten im sub-nm Bereich zu bestimmen. Entscheidende Voraussetzung für das tatsächliche Erreichen der theoretisch möglichen Genauigkeit der Ellipsometrie ist eine korrekte Justierung des Geräts in bezug auf die Probe. Fehljustierungen können beispielsweise infolge von Fehlbedienungen oder durch Langzeitdrifts des mechanischen Aufbaus des Geräts eintreten. Geringe Fehljustierungen lassen sich jedoch nicht ohne weiteres feststellen. Deshalb besteht die Gefahr, daß sie auf die Meßergebnisse als systematischer Fehler übertragen werden.

Für praktische Anwendungen, insbesondere bei der kontinuierlichen Qualitätskontrolle in der Fertigung von dünnen Schichten kommt es entscheidend darauf an, die perfekte Justierung des Ellipsometers in bezug auf die Probe auch bei häufigem Probenwechsel über lange Zeiträume zu gewährleisten. Nur so kann die Ellipsometrie ihr Potential auch bei hohem Probendurchsatz voll ausschöpfen.

Nach dem Stand der Technik ist die Gewährleistung der korrekten Justierung nur über aufwendige Eichmessungen anhand von vollständig charakterisierten Proben möglich. Dies kann nur stichprobenartig durch eine Bedienungsperson erfolgen.

Ein Ausweg ist die Verwendung eines positionsempfindlichen Detektors im Analysatorarm eines photometrischen Ellipsometers, wie es in EP 0 632 256 A1 und US-5,502,567 vorgeschlagen wurde. Die kreisförmige Symmetrie des dort verwendeten Detektor-Arrays in Kombination mit einer vorgeschalteten Mikro-Optik liefert ein Signal, welches sowohl auf die Verkippung der Probe als auch auf den Abstand äußerst empfindlich reagiert. Als besonders effektiv hat sich ein transparenter Kegel erwiesen, der direkt auf ein kreisrundes Array aus einer geraden Anzahl identischer Photodetektoren befestigt wird ("Kegelpolarimeter"). Bei korrekter Justierung des Systems Probe-Ellipsometer erhält man ein streng symmetrisches sinus-förmiges Signal, wie bei einem photometrischen Ellipsometer mit rotierendem Polarisator. Das Kegelpolarimeter stellt damit ein intrinsisches Bezugssystem des Ellipsometers dar. Nachteilig ist jedoch, daß die Response des Kegelpolarimeters auf Lageveränderungen der Probe sehr komplex und nicht linear ist. Die Auswirkungen von Verkippungen und linearen Verschiebungen auf das Signal sind nicht unabhängig voneinander, so daß die drei Freiheitsgrade nicht aus einem einzigen Signal heraus separierbar sind. Das gilt besonders bei sehr starken Abweichungen von der idealen Position. Damit läßt sich eine Regelung für die Automatisierung nur schwer realisieren. Das Kegelpolarimeter liefert das Ziel, jedoch nicht den Weg dorthin.

Ein weiterer Nachteil besteht darin, daß bei geringfügigen Verstellungen des Meßsystems, sei es durch eine thermisch bedingte Drift des Systems Ellipsometer-Probe, mechanische Einwirkungen oder auch durch eine Drift der Elektronik, die laufenden Messungen unterbrochen werden müssen, um mittels Eichmessungen das System wieder zu justieren. Dies ist zeitlich aufwendig und erfordert qualifiziertes Bedienungspersonal.

Eine Vorrichtung, bei der das Nachjustieren teilautomatisiert ist, wird in der Offenlegungsschrift DE 24 30 521 A1 beschrieben. Bei der Vorrichtung handelt es sich um eine Anordnung für ellipsometrische Messungen, die mit einer automatisierten Justiervorichtung versehen ist. Die Justiervorrichtung funktioniert nach der Prämisse, daß bei definiertem Einfallsraumwinkel (festgelegt durch eine Lochblende im Strahlengang des Ellipsometers) der zu analysierende reflektierte Strahl in einen festgelegten Raumwinkel fallen muß (erfaßt durch den Detektor). Bei fester Meßgeometrie werden die zueinander orthogonalen Winkel zwischen Probenoberfläche und Strahlebene sowie zwischen Probenoberfläche und Strahl selbst angepaßt.

Die Einrichtung zur Bestimmung der Strahlabweichung besteht aus vier lichtempfindlichen Elementen samt Glasfaserkabeln, die in je einem Quadranten angeordnet sind, und einer zentralen Apertur, die den Ausfallraumwinkel definiert. Dabei dienen jeweils gegenüberliegende Elemente der Feststellung einer Winkelabweichung und, dadurch, daß sie als Paar an jeweils einen Verstellmotor angeschlossen sind, auch der automatischen Korrektur eben jener Winkelabweichung. Solange die Intensitätsverteilung auf gegenüberliegenden Quadranten nicht symmetrisch ist, wird die Probenorientierung verändert.

Mit dieser Vorrichtung kann somit nur eine Verkippung der Probe nachgewiesen werden, nicht aber eine Abweichung in der Höhe der Probenposition. Die Tatsache, daß bei der Vorrichtung die Höhenjustierung nur von Hand vorgenommen werden kann, bringt eine höhere Meßungenauigkeit mit sich und einen unverhältnismäßig hohen Aufwand, wenn eine höhere Anzahl von Proben gemessen werden soll. Außerdem sind das Detektorsystem und das Ellipsometer nicht entkoppelt, sondern haben einen gemeinsamen Strahlengang. Die Ausrichtung von Ellipsometer und Detektorsystem zueinander ist also nicht beliebig. Durch Kopplung beider Systeme werden immer die absoluten Abweichungen der Probenpositionen vom Ursprung des Koordinatensystems gemessen. Dies führt dazu, daß die Position des Ellipsometers und des Detektorsystems fest sind und die Justierung der Probe ausschließlich über eine Veränderung der Probenposition bewerkstelligt wird.

Den herkömmlichen Ellipsometervorrichtungen ist gemeinsam, daß die Justierung des Ellipsometers stets über den Probentisch erfolgt. Wird beispielsweise mit drei Bezugspunkten auf der Probe gearbeitet, denen drei Sensoren zugeordnet sind, muß der Meßpunkt bezüglich dieser drei Bezugspunkte einjustiert werden. Dies funktioniert nur bei ebenen Proben. Bei gewölbten Proben versagt dieses System. Insbesondere sehr große Proben (große Wafer oder Flachbildschirme) erfordern einen sehr hohen Aufwand. Bei großen Wafern mit einem Durchmesser von 300 mm treten bereits durch das Eigengewicht Wölbungen auf. Oftmals sind die Proben auch infolge von mechanischen Spannungen nach einer Beschichtung verzogen. Das würde die Messung verfälschen, da damit bei einem Abtastvorgang der Probenoberfläche die einmal eingestellte Probenausrichtung nicht erhalten bliebe. Deshalb sind die Probentische mit einer Vakuumansaugvorrichtung versehen. Damit wird die Probe angesaugt und flach auf den Probentisch gepreßt. Dieses Verfahren ist teuer und bei empfindlichen Proben oft von Nachteil. Da für den Transport der Proben in der Fertigung keine derartigen Probentische verwendet werden, muß die Probe für die Messung dem Fertigungsprozeß entzogen werden, zum Ellipsometer transportiert werden und nach der Messung wieder zurücktransportiert werden. Oft sind daher nur Stichproben möglich. Wafer aus der Mikrosystemtechnik, die sehr dünne Membranen enthalten, können ohnehin mit diesen Vorrichtungen nicht vermessen werden, da die dünnen Membranen durch das Vakuumansaugen zerstört werden können.

Aufgabe der Erfindung ist eine Vorrichtung, mit der eine automatische relative Justierung von Probe und Ellipsometer möglich ist, ohne daß wiederholte Eichmessungen erforderlich werden. Die Erfindung bezieht sich auch auf ein entsprechendes Verfahren sowie eine Vorrichtung zur Erkennung der Probenposition.

Die Aufgabe wird mit einer Vorrichtung gelöst, die dadurch gekennzeichnet ist, daß das Proben-Lage-Erkennungssystem bezüglich des Ellipsometers verriegelbar ist, daß das Erkennungssystem zur Erkennung des Abstandes der Probe vom Koordinaten-Ursprung des Ellipsometers und zur Erkennung der Verkippung der Probe in zwei senkrecht zueinander stehenden Achsen ausgebildet ist und daß die Verstelleinrichtung auf den Probentisch und/oder auf das Gesamtsystem Erkennungssystem/Ellipsometer einwirkt.

Eine bevorzugte Ausführungsform des Proben-Lage-Erkennungssystems weist eine Lichtquelle und optische Elemente auf, mit denen zwei Strahlen auf die Oberfläche der Probe lenkbar sind. Ferner umfaßt das Erkennungssystem zwei Detektoren, die das von der Probenoberfläche reflektierte Licht erfassen, wobei ein erster positionsempfindlicher Detektor für die Erkennung der Verkippung der Probe und ein zweiter positionsempfindlicher Detektor für die Erkennung des Probenabstandes vorgesehen sind.

Zwei Detektoren sind nicht zwingend erforderlich. Beispielsweise reicht ein positionsempfindlicher Detektor aus, um die Verkippung festzustellen, weil eine Dejustierung in z-Richtung über die Signalstrukturanalyse des Polarimetersignals erkannt werden kann.

Andere Sensoranordnungen, die zur Lagebestimmung des Ellipsometers eingesetzt werden können, sind möglich.

Wichtig ist in diesem Zusammenhang auch, daß auf nur einen Meßpunkt einjustiert wird. Daher können auch gewölbte Substrate bzw. Substrate mit nichtkonstanter Dicke vermessen werden. Wandert nämlich der Meßpunkt aus der optimalen Stellung heraus, wird dies vom System erkannt und so lange nachgeregelt, bis der ursprüngliche vom System vorgesehene Meßpunkt wieder erreicht ist.

Das Proben-Lage-Erkennungssystem liefert Signale, die eindeutig jedem Freiheitsgrad zugeordnet sind, so daß anhand dieser Regelgrößen eine Justierung über die Verstelleinrichtung möglich wird. Das Koordinatensystem des Proben-Lage-Erkennungssystems wird auf das Koordinatensystem des Ellipsometers einjustiert und verriegelt, wobei unter Verriegelung vorzugsweise ein elektronischer Vorgang verstanden wird. Dies geschieht dadurch, daß nach der Justierung von Proben-Lage-Erkennungssystem und Ellipsometer die jeweilige Position der auf den positionsempfindlichen Detektoren auftreffenden Lichtstrahlen, vorzugsweise Laserstrahlen, als Bezugsposition elektronisch, beispielsweise in einer Steuereinheit, festgehalten wird.

Wenn sich beim Routinebetrieb die Proben-Lage ändern sollte, wird die Abweichung durch veränderte Auftreffpositionen der Lichstrahlen auf den Detektoren erkannt. Hieraus werden Regelsignale erzeugt, die zur Ansteuerung der Verstelleinrichtung verwendet werden.

Die Verstelleinrichtung kann entweder die Proben-Lage verändern oder die Lage des einjustierten Gesamtsystems Ellipsometer/Proben-Lage-Erkennungssystem bezüglich der Probe. Die Verstellung sowohl des Probentisches als auch des Gesamtsystems ist zwar möglich, jedoch gegenüber der zuvor genannten Alternativen wegen des erheblich größeren technischen Aufwandes nicht bevorzugt.

Die Verstelleinrichtung weist vorzugsweise mindestens einen Translationsaktuator und zwei Schwenkaktuatoren auf, so daß eine Lageänderung des Probentisches und/oder des Gesamtsystems Ellipsometer/Proben-Lage-Erkennungssystems in den gewünschten Freiheitsgraden möglich ist.

Gemäß einer weiteren Ausführungsform kann das Ellipsometer zusätzlich an eine Signalanalyseeinheit angeschlossen sein, die mit der Verstelleinrichtung verbunden ist. Diese Signalanalyseeinheit dient u.a. zum sogenannten dynamischen Abgleich, der im Zusammenhang mit den Verfabrensansprüchen erläutert wird.

Darüber hinaus kann diese Signalanalyseeinheit beispielsweise zur Erkennung einer z-Dejustierung eingesetzt werden, wie zuvor beschrieben wurde.

Das Proben-Lage-Erkennungssystem übernimmt in der erfindungsgemäßen Vorrichtung die Rolle des aus dem Stand der Technik bekannten Autokollimationsteleskops und der positionsempfindliche Kanal des Ellipsometers die der Eichmessung. Damit kann jederzeit der ideale Justierzustand automatisch überprüft werden, ohne daß aufwendige Eichmessungen durch das Bedienungspersonal erforderlich sind. Dem Anwender wird eine sehr hohe Wiederholgenauigkeit der Messungen über lange Zeiträume und unter veränderten äußeren Bedingungen gewährleistet.

In einer bevorzugten Ausführungsform wirkt die Verstelleinrichtung der Meßvorrichtung auf das Gesamtsystem aus Erkennungssystem und Ellipsometer, wohingegen die Probe selbst nicht bewegt wird. Dazu wird die gesamte Vorrichtung in einen kleinen Meßkopf integriert. Dies hat unbestreitbare Vorteile bei der Anwendung der Vorrichtung zur Qualitätskontrolle bei der Produktion von großen Proben, wie z.B. Wafern oder Flachbildschirmen. Da die Justierung des Systems Ellipsometer/Probe über das Ellipsometer bewerkstelligt wird, kann die Vorrichtung in die vorhandene Prozeßumgebung integriert werden, ohne daß ein zusätzlicher aufwendiger Probentisch erforderlich wäre. Beispielsweise können die meist ohnehin vorhandenen Roboter die Probe kurz unter das Ellipsometer halten. Die für eine ellipsometrische Messung unzureichende mechanische Genauigkeit der Roboter wird durch die im Meßkopf befindliche Autojustage korrigiert, und zwar sowohl im Winkel als auch im Abstand. Auch eine mögliche Verspannung der Probe wird durch die Nachjustierung korrigiert. Da die Proben im Fertigungsfluß verbleiben, wird einerseits die Durchlaufzeit reduziert, andererseits eine hundertprozentige Qualitätskontrolle möglich. Da die Messung in den Prozeß integriert ist, werden außerdem Prozeßabweichungen schneller erkannt und so die Ausbeute erhölt. Die Integrierung der Vorrichtung in die Fertigungsumgebung ist nicht zuletzt wegen der extremen Kleinheit des Gerätes problemlos.

Das Verfahren ist dadurch gekennzeichnet, daß zunächst anhand einer ersten Probe (Eichprobe) das System Probe-Ellipsometer über die Symmetrie des Detektorsignals des Ellipsometers justiert wird. Danach wird das Proben-Lage-Erkennungssystem, das den Probenabstand vom Koordinaten-Ursprung des Ellipsometers und die Verkippung der Probe in zwei senkrecht zueinander stehenden Achsen erkennt, bezüglich es Ellipsometers justiert und nach der Justierung mit diesem verriegelt. Bei allen weiteren Proben wird anhand der Signale des Erkennungssystems eine relative Ausrichtung von Probe und Ellipsometer/Erkennungssystem durchgeführt.

Vorzugsweise wird laufend die Symmetrie des Ellipsometersignals überwacht und bei Abweichung von der Symmetrie das Ellipsometer nachjustiert. Es handelt sich hierbei um den sogenannten dynamischen Abgleich, bei dem von einem einjustierten Ellipsometersystem ausgegangen wird. Im Verlauf des Betriebes der Vorrichtung kann es zu geringfügigen Verstellungen des Systems kommen, die beispielsweise durch eine thermisch bedingte Drift der Mechanik, durch mechanische Einwirkungen oder auch durch eine Drift der Elektronik des Proben-Lage-Erkennungssystems verursacht werden. Es kann daher der Fall eintreten, daß das Proben-Lage-Erkennungssystem das Ellipsometer in eine Position bringt, bei der das Ellipsometersignal nicht mehr die erforderliche Symmetrie zeigt. Das erfindungsgemäße Verfahren sieht daher einen sogenannten permanenten Selbsttest vor, in dem die Symmetrie des Signals mittels der Signalanalyseeinheit ständig überwacht wird. Falls es zu einer Dejustierung aufgrund der genannten Driften kommen sollte, so wird die (elektronische) Verriegelung des Proben-Lage-Erkennungssystems aufgehoben und das Ellipsometer über die Verstelleinrichtung wieder in die richtige Position gebracht. Danach wird das Proben-Lage-Erkennungssystem auf die neue Position verriegelt.

Dieser dynamische Abgleich macht die erfindungsgemäße Vorrichtung völlig unabhängig von einer externen Eichmessung, die in der Praxis bei den bekannten Geräten erforderlich ist. Eine Unterbrechung des Meßprozesses, um eine Eichprobe einzuführen und die erforderlichen Messungen durchzuführen, ist daher nicht erforderlich. Das gesamte System ist selbstkalibrierend, so daß keine spezielle Eichprobe erforderlich ist. Dadurch wird die Prozeßsicherheit erhöht und eine hohe Wiederholgenauigkeit der Messungen gewährleistet.

Die Erfindung ermöglicht eine schnelle, vom Probenmaterial unabhängige und linear arbeitende Justageeinheit mit automatischer Erkennung von Dejustagezuständen während des normalen Meßbetriebs des Ellipsometers. Eine Detektion mit linearer Response ist dabei einfacher zu handhaben und schneller als eine nichtlineare. Die Erfindung ist besonders im Bereich der Prozeßkontrolle, z.B. in der Halbleiterindustrie von Bedeutung. Hier werden Schichtdicken von wenigen nm Dicke gemessen. Eine auch nur geringe Dejustage des Systems Ellipsometer-Probe kann daher zu erheblichen systematischen Meßfehlern führen. Die Erfindung hilft, grobe systematische Fehler automatisch und schnell zu erkennen und zu korrigieren. Der Anwender hat damit ein wesentlich verläßlicheres System als bisher, wo er auf ständige Kontrollmessungen zur Feststellung des Zustandes seines Meßgeräts angewiesen ist.

Die Vorrichtung zur Erkennung der Position einer zu untersuchenden Probe relativ zu einem Nachweissystem ist dadurch gekennzeichnet, daß eine Lichtquelle und optische Elemente, mit denen zwei Strahlen auf die Oberfläche der Probe lenkbar sind, sowie zwei positionsempfindliche Detektoren, die das von der Probenberfläche reflektierte Licht erfassen, wobei ein erster Detektor für die Erkennung der Verkippung der Probe und ein zweiter Detektor für die Erkennung des Probenabstandes vorgesehen sind. Diese Vorrichtung läßt sich bei beliebigen spektroskopischen Messungen einsetzen.

Eine beispielhafte Ausführungsform der Erfindung wird nachfolgend anhand der Zeichnungen näher erläutert.

Es zeigen:
- Fig. 1: eine schematische Darstellung der Vorrichtung,
- Fign. 2a-c: die möglichen Lageveränderungen der Probe und die Auswirkungen auf das Proben-Lage-Erkennungssystem,
- Fign.3a-c: eine in einem Meßkopf integrierte Vorrichtung, perspektivisch und in zwei Schnitten, und
- Fig. 4: einen Meßkopf nach Fig. 3 im Einsatz bei der Vermessung von Wafern.

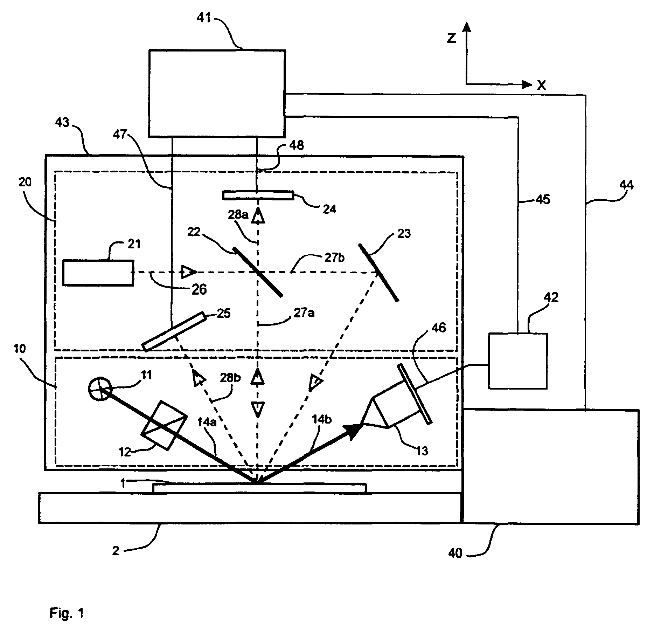

In der Fig. 1 ist eine schematische Darstellung der erfindungsgemäßen Vorrichtung zu sehen. Auf einem Probentisch 2 befindet sich eine Probe 1, über der das Ellipsometer 10 für die Untersuchung der Oberflächeneigenschaften der Probe 1 angeordnet ist. Das Ellipsometer 10 weist eine Lichtquelle 11, einen Polarisator 12 und ein Kegelpolarimeter 13 auf. Das von der Lichtquelle 11 ausgesandte Licht (einfällender Strahl 14a) wird durch den Polarisator 12 polarisiert und trifft auf der Probenoberfläche auf, wo eine Reflektion erfolgt. Der reflektierte Lichtstrahl 14b trifft auf das Polarimeter 13, das an eine Auswerteeinrichtung (nicht dargestellt) angeschlossen ist, in dem die Auswertung des detektierten reflektierten Lichtstrahls 14b vorgenommen wird.

Oberhalb des Ellipsometers 10 ist ein Proben-Lage-Erkennungssystem 20 angeordnet, das einen Laser 21 aufweist. Der vom Laser 21 ausgesandte Lichtstrahl 26 wird am teildurchlässigen Spiegel 22 senkrecht nach unten auf die Probe 1 abgelenkt (Lichtstrahl 27a). Ein Teil des Lichtstrahls 26 trifft auf den Umlenkspiegel 23, der den Lichtstrahl 27b ebenfalls auf die Probe 1 lenkt. Die beiden reflektierten Strahlen 28a und 28b treffen auf positionsempfindliche Detektoren 24 und 25, die über Signalleitungen 47,48 mit einer Steuereinrichtung 41 verbunden sind. Über eine Steuerleitung 44 werden entsprechende Signale an eine Verstelleinrichtung 40 abgegeben, die den Probentisch 2 mit dem Gesamtsystem 43 verknüpft.

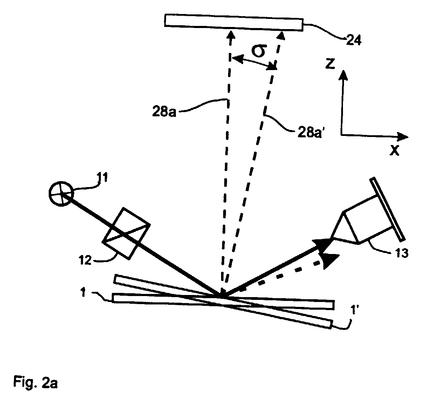

Wenn die Lage der Probe sich gegenüber der in der Fig. 1 gezeigten Position verändert, wie dies in den Fign. 2a-c dargestellt ist, werden auch die Strahlen 28a,28b unter anderen Winkeln reflektiert, was von den entsprechenden Detektoren 24 und 25 erkannt wird. In der Fig. 2a ist die Probe 1 in einer gekippten Stellung dargestellt (Probe 1'), so daß der reflektierte Strahl 28a unter dem Winkel σ zurückreflektiert wird. Der reflektierte Strahl 28a' trifft somit an einer anderen Stelle auf den Detektor 24 auf, was von diesem erkannt wird. Über die Verstelleinrichtung 40 kann nun die Probe 1' in die ursprüngliche Position 1 zurückgeführt werden. Die andere Möglichkeit besteht darin, das Gesamtsystem 43 aus Proben-Lage-Erkennungssystem 20 und Ellipsometer 10 nachzuführen, so daß der reflektierte Strahl 28a' die Position des ursprünglichen Strahls 28a einnimmt.

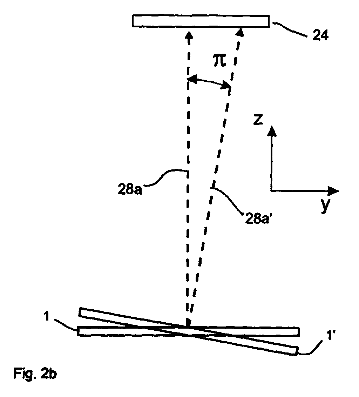

In der Fig. 2b ist eine Verkippung in einer Richtung senkrecht zu der in der Fig. 2a dargestellten Verkippung zu sehen. Auch hier führt die Anderung der Proben-Lage zu einer Änderung des Auftreffpunktes des reflektierten Strahls 28a bzw. 28a'.

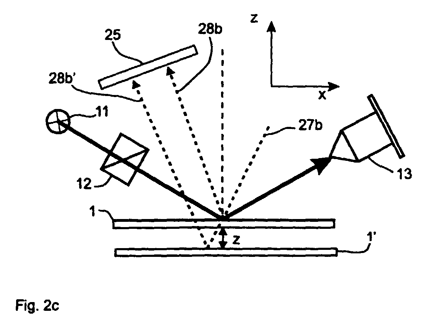

In der Fig. 2c ist eine Parallelverschiebung der Probe 1,1' in Richtung der Z-Achse dargestellt. Der Auftreffpunkt des einfallenden Strahls 27b wird durch diese Lageänderung verschoben, was zu einer Parallelverschiebung des Strahls 28b zum Strahl 28b' führt. Diese Positionsveränderung wird von dem Detektor 25 erkannt. Auch hier wird über die Verstelleinrichtung 40 eine entsprechende Nachjustierung vorgenommen.

In der Fig. 1 ist das Gesamtsystem 43 über die Signalleitung 45 zusätzlich an eine Signalanalyseeinrichtung 42 angeschlossen, die die Symmetrie des Polarimetersignals kontinuierlich überwacht. Über eine Signalleitung 45, die Steuereinrichtung 41 und die Steuerleitung 44 ist diese Signalanalyseeinrichtung 42 ebenfalls an die Verstelleinrichtung 40 angeschlossen. Bei einer Abweichung von der geforderten Symmetrie wird die (elektronische) Verriegelung des Proben-Lage-Erkennungssystems aufgehoben und das Gesamtsystem 43 über die Verstelleinrichtung 40 wieder in die richtige Position gebracht.

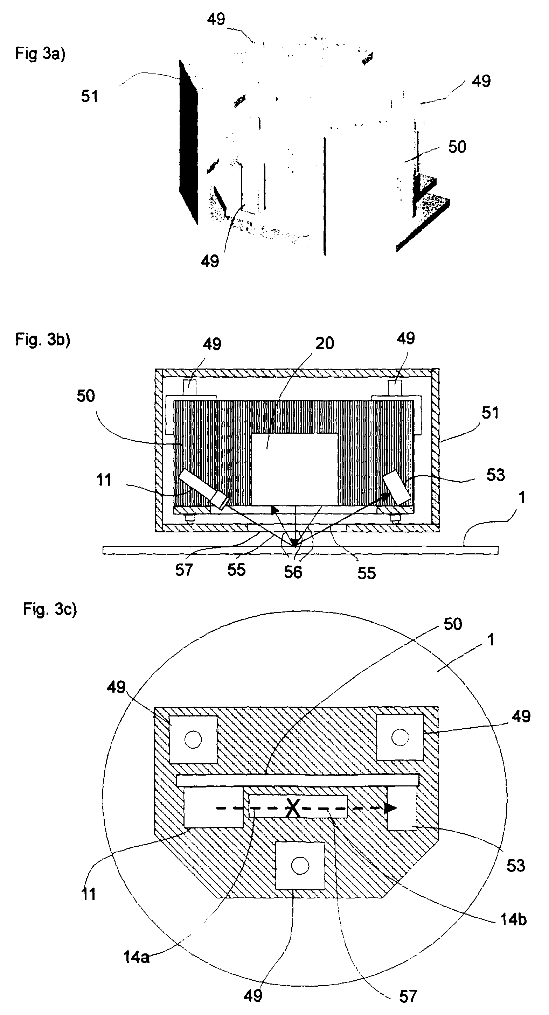

In den Fign. 3a-c ist ein Ausführungsbeispiel dargestellt, bei dem die Vorrichtung in einem kleinen Meßkopf integriert ist. Fig. 3a zeigt eine perspektivische Darstellung, Fig. 3b einen Schnitt senkrecht zur Probe und Fig. 3c einen Schnitt parallel zur Probe.

In Fig. 3a kann man erkennen, wie die drei Stellmotoren 49 relativ zum Rahmen 51 des Meßkopfes sowie zur Ellipsometerbasisplatte 50 angeordnet sind. Auf der Ellipsometerbasisplatte ist die eigentliche Meßvorrichtung angebracht. Mittels der Stellmotoren 49 wird sie bezüglich der Probe einjustiert.

Fig. 3b zeigt einen Schnitt durch den Meßkopf senkrecht zur Probenoberfläche. Innerhalb des Rahmens 51 sind die Stellmotoren 49 angebracht, die die Ellipsometerbasisplatte 50 bewegen. Auf der Ellipsometerbasisplatte 50 sind zum einen das Proben-Lage-Erkennungssystem 20 und zum anderen die Lichtquelle 11 des Ellipsometers und ein Detektor 53 befestigt. Durch den Schlitz 57 verlaufen die Meßstrahlen 55 sowie die Sensorstrahlen 56 des Proben-Lage-Erkennungssystems. Über die Sensorstrahlen 56 erkennt das Proben-Lage-Erkennungssystem 20 eine mögliche Auslenkung des Ellipsometersystems aus der idealen Meßposition und veranlaßt eine Verstellung der Ellipsometerbasisplatte 50 durch die Stellmotoren 49, um das Ellipsometersystem wieder in die richtige Position relativ zur Probe 1 zu bringen.

In Fig. 3c ist ein Schnitt durch den Meßkopf parallel zur Probe 1 dargestellt. Die Lichtquelle 11 und der Detektor 53 sind an der Ellipsometerbasisplatte 50 befestigt. Der Strahlengang aus einfallendem Strahl 14a und ausfallendem Strahl 14b verläuft durch den Schlitz 57 und trifft dabei bei dem Kreuz auf die Probenoberfläche. Die drei Stellmotoren 49, die sowohl die Höhe als auch die beiden Winkel zwischen Ellipsometersystem und Probenoberfläche einstellen, sowie die Ellipsometerbasisplatte 50 sind auf der Grundplatte 52 befestigt.

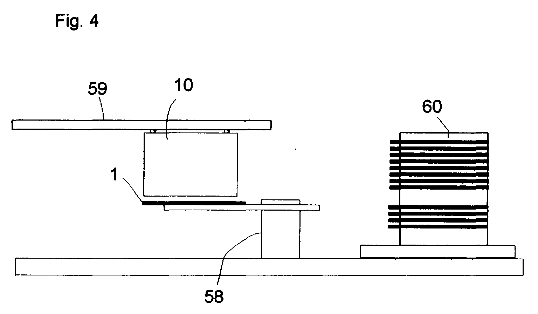

In Fig. 4 ist eine mögliche Ausführungsform dargestellt, wie sie in den Produktionsprozeß von beispielsweise Wafern integriert werden könnte. Die Proben 1 befinden sich in einem Probenständer 60. Ein Roboter 58 transportiert eine Probe 1 unterhalb des Ellipsometers 10, das an einem Träger 59 befestigt ist. Das Ellipsometer 10 justiert sich nun automatisch bezüglich der Probenoberfläche ein und führt die Messung durch. Nach Beendigung der Messung transportiert der Roboter 58 die Probe 1 in den Probenständer 60 zurück.

### Bezugszeichen

- 1,1': Probe
- 2: Probentisch
- 10: Ellipsometer
- 11: Lichtquelle
- 12: Polarisator
- 13: Kegelpolarimeter
- 14a: einfallender Lichtstrahl
- 14b: reflektierter Lichtstrahl
- 20: Proben-Lage-Erkennungssystem
- 21: Laser
- 22: teildurchlässiger Spiegel
- 23: Spiegel
- 24: erster Detektor
- 25: zweiter Detektor
- 26: Laserstrahl
- 27a: erster Strahl
- 27b: zweiter Strahl
- 28a: erster reflektierter Strahl
- 28b: zweiter reflektierter Strahl
- 40: Verstelleinrichtung
- 41: Steuereinrichtung des Proben-Lage-Erkennungssystems
- 42: Signalanalyseeinrichtung
- 43: Gesamtsystem Ellipsometer/Erkennungssystem
- 44: Steuerleitung
- 45: Signalleitung
- 46: Signalleitung
- 47: Signalleitung
- 48: Signalleitung
- 49: Stellmotor
- 50: Ellispometerbasisplatte
- 51: Rahmen
- 52: Grundplatte
- 53: Detektor
- 55: Meßstrahl
- 56: Sensorstrahl
- 57: Schlitz für Meß- und Sensorstrahlen
- 58: Roboter
- 59: Träger
- 60: Probenständer

## Patentansprüche

1. Vorrichtung zur automatischen relativen Justierung von einer auf einem Probentisch befindlichen Probe bezüglich eines die Probenoberfläche untersuchenden Ellipsometers, wobei dem Ellipsometer ein bezüglich des Ellipsometers justierbares Proben-Lage-Erkennungssystem zugeordnet ist, das an eine Verstelleinrichtung angeschlossen ist, **dadurch gekennzeichnet,**
- daß das Proben-Lage-Erkennungssystem (20) bezüglich des Ellipsometers verriegelbar ist,
- daß das Erkennungssystem (20) zur Erkennung des Abstandes der Probe (1) vom Koordinaten-Ursprung des Ellipsometers (10) und zur Erkennung der Verkippung der Probe (1) in zwei senkrecht zueinander stehenden Achsen ausgebildet ist, und
- daß die Verstelleinrichtung auf den Probentisch (2) und/oder auf das Gesamtsystem (43) Erkennungssystem (20)/Ellipsometer (10) einwirkt.

2. Vorrichtung nach Anspruch 1, **dadurch gekennzeichnet**, daß das Erkennungssystem (20) eine Lichtquelle (21) und optische Elemente (22,23), mit denen zwei Strahlen (27a,27b) auf die Oberfläche der Probe (1) lenkbar sind, sowie zwei positionsempfindliche Detektoren (24 und 25) aufweist, die das von der Probenoberfläche reflektierte Licht erfassen, wobei ein erster Detektor (24) für die Erkennung der Verkippung der Probe (1) und ein zweiter Detektor (25) für die Erkennung des Probenabstandes vorgesehen sind.

3. Vorrichtung nach einem der Ansprüche 1 oder 2, **dadurch gekennzeichnet,** daß die Verstelleinrichtung (40) mindestens einen Translationsaktuator und zwei Schwenkaktuatoren aufweist.

4. Vorrichtung nach einem der Ansprüche 1 bis 3, **dadurch gekennzeichnet,** daß an das Ellipsometer (10) eine Signalanalyseeinheit (42) angeschlossen ist, die mit der Verstelleinrichtung (40) verbunden ist.

5. Vorrichtung nach einem der Ansprüche 1 bis 4, **dadurch gekennzeichnet,** daß die Verstelleinrichtung auf das Gesamtsystem (43) Erkennungssystem (20)/Ellipsometer (10) einwirkt.

6. Verfahren zur automatischen relativen Justierung von einer auf einem Probentisch befindlichen Probe bezüglich eines die Probenoberfläche untersuchenden Ellipsometers, bei dem
- zunächst anhand einer ersten Probe das System Probe-Ellipsometer über die Symmetrie des Detektorsignals des Ellipsometers justiert wird,
- dann ein Proben-Lage-Erkennungssystem, das den Probenabstand vom Koordinaten-Ursprung des Ellipsometers und die Verkippung der Probe in zwei senkrecht zueinander stehenden Ebenen erkennt, bezüglich des Ellipsometers justiert und nach der Justierung mit diesem verriegelt wird,
- und bei allen weiteren Proben anhand der Signale des Erkennungssystems eine relative Ausrichtung von Probe und Ellipsometer-/Erkennungssystem durchgeführt wird.

7. Verfahren nach Anspruch 6, **dadurch gekennzeichnet**, daß laufend die Symmetrie des Ellipsometersignals überwacht wird und daß bei Abweichungen von der Symmetrie das Ellipsometer nachjustiert wird.

8. Vorrichtung zur Erkennung der Position einer zu untersuchenden Probe relativ zu einem Nachweissystem, **dadurch gekennzeichnet,** daß
- eine Lichtquelle und optische Elemente, mit denen zwei Strahlen auf die Oberfläche der Probe lenkbar sind,
- sowie zwei positionsempfindliche Detektoren, die das von der Probenberfläche reflektierte Licht erfassen, wobei ein erster Detektor für die Erkennung der Verkippung der Probe und ein zweiter Detektor für die Erkennung des Probenabstandes vorgesehen sind.
